Europäisches Patentamt

European Patent Office

Office européen des brevets

(11) Publication number: **0 317 227**
**A2**

## (12) EUROPEAN PATENT APPLICATION

(21) Application number: 88310711.2

(22) Date of filing: 14.11.88

(51) Int. Cl.4: **B01J 29/04 , C10G 11/05**

(30) Priority: 16.11.87 US 120891
16.11.87 US 120890

(43) Date of publication of application:
24.05.89 Bulletin 89/21

(84) Designated Contracting States:
**BE DE FR GB IT NL SE**

(71) Applicant: **MOBIL OIL CORPORATION**
**150 East 42nd Street**
**New York New York 10017(US)**

(72) Inventor: **Chen, Nai Yuen**
**Forrest Central Drive, RD**
**Titusville, NJ 08560(US)**
Inventor: **Chu, Cynthia T-W.**
**18 Indian Run Road**
**Princeton Junction, NJ 08550(US)**
Inventor: **Chang, Clarence D.**
**11 Murray Place**
**Princeton, NJ 08540(US)**
Inventor: **Degnan, Thomas F., Jr.**
**40 N. Homestead Drive**
**Yardley, PA 19067(US)**
Inventor: **McCullen, Sharon B.**
**119 Colonial Drive**
**Newtown, PA 18940(US)**

(74) Representative: **Jones, Alan John et al**
**CARPMAELS & RANSFORD 43 Bloomsbury**
**Square**
**London, WC1A 2RA(GB)**

(54) Gallosilicate Zeolite beta and the preparation and use as catalyst thereof.

(57) Zeolite beta contains gallium in tetrahedral coordination in the framework, aluminium and/or boron optionally being also present as framework elements. The zeolite is prepared by hydrolytic displacement of non-gallium framework atoms and introduction of gallium by treatment with an aqueous solution of a gallium compound. The resulting gallosilicate beta is useful as a catalyst in hydrocarbon conversion, particularly cracking and paraffin isomerisation.

EP 0 317 227 A2

# GALLOSILICATE ZEOLITE BETA AND THE PREPARATION AND USE AS CATALYST THEREOF

This invention is directed to gallium containing zeolite beta; to its preparation; and to catalysts containing it, which show excellent cracking activity and high aromatic selectivity.

Zeolites have pores of uniform size determined by structure of the crystal and are therefore sometimes referred to as "molecular sieves", because the uniform pore size of a zeolite may allow it to selectively adsorb molecules of certain dimensions and shapes. In their aluminosilicate form they are based on an infinitely extending three-dimensional framework of $AlO_4$ and $SiO_4$ tetrahedra linked to each other by sharing of oxygen atoms, and in the dehydrated form are conventionally represented by the formula, in mole ratios of oxides:

$M_{2/n}O.Al_2O_3.xSiO_2$

In this formula M represents a cation of valence n, cations necessarily being present in the structure in quantity equivalent to aluminium since the Al-centered tetrahedra bear a negative charge which requires neutralisation. M may be a metal of Groups I to VIII of the Periodic Table, and can also be non-mental such as hydrogen, ammonium or an organic cation. X is equal to or greater than 2, since $AlO_4$ tetrahedra are joined only to $SiO_4$ tetrahedra. The ratio of the total of silicon and aluminium atoms to oxygen atoms is 1:2.

The silicon/aluminium atomic ratio of a given zeolite is often variable, and in some zeolites the upper limit of the silicon/aluminium atomic ratio is unbounded, as in the case of ZSM-5 wherein the silicon/aluminium atomic ratio is at least 2.5 and up to infinity. It has been reported that elements other than aluminium, such as boron and iron, can serve in place of aluminium in the framework of certain zeolites.

ZSM-5 is a member of a class of zeolites sometimes referred to as medium pore zeolites, having a pore size from about 5 to about 7 Angstroms. Another class of zeolites, sometimes referred to as large pore zeolites, includes inter alia naturally occurring faujasite, synthetic zeolites X, L, Y and zeolite beta. These zeolites are characterized by pore sizes greater than those of the medium pore zeolites, namely greater than about 7 Angstroms. Zeolite beta is disclosed in US-A-3,308,069 and, like ZSM-5, has been reported to have been made with various framework elements, notably boron. EP-A-55046 discloses aluminosilicate forms of a zeolite, described as a member of the beta family, in the general formula of which gallium is one of several elements listed as alternatives to aluminium.

Zeolite beta may be recognised and distinguished from other zeolites by the following x-ray diffraction pattern:

11.4±0.2
7.4±0.2
6.7±0.2
4.25±0.1
3.97±0.1
3.0±0.1
2.2±0.1

More detailed x-ray data of the zeolite, obtained from the sodium form and various cation-exchanged forms, are set forth in Tables 2 and 3 of US-A-3,308,069.

We have now discovered that gallium modified zeolite beta can be prepared by treatment of the zeolite with a source of Ga in aqueous solution at reflux or lower temperatures, the gallium being incorporated as part of the framework of the zeolite and optionally also as cation and/or impregnant. The starting zeolite can be a boro- or aluminosilicate beta.

According to the present invention a crystalline metallosilicate zeolite has the x-ray diffraction pattern of zeolite beta and the formula, in terms of mole ratios of oxides:

$M_{2/n}O:(a)Al_2O_3:(b)B_2O_3:(c)Ga_2O_3:(d)SiO_2$

in which M is a cation of valence n, (a) + (b) + (c) = 1, (a) = 0 to 0.5, (b) = 0 to 0.3, (c) = 0.2 to 1 and (d) = 5 to 3000. In preferred forms of the zeolite the ratio (d):(c) has the value 30 to 500, the ratio (d):(b) has the value 100 to 10,000, and the ratio (d):(a) has the value 50 to 15,000. In at least these preferred forms the zeolite has an alpha value greater than 50.

The cation M may be any of the Group I to VIII metals, or a non-metallic cation such as ammonium or a quaternary grouping. In particularly contemplated embodiments M may be at least partly Ga (which may be present as a consequence of the manner in which the zeolite is prepared) or at least partly hydrogen or a precursor thereof.

The zeolite may be used as a catalyst in the form of a composite of 1 to 90% wt, preferably 20 to 70% wt, of zeolite with 80 to 30% wt of a porous, inorganic matrix such as silica, alumina and/or a clay. Such a catalyst may be produced in the form of particles suitable for use in an FCC or TCC cracking unit.

The gallosilicate may be prepared by subjecting zeolite beta in which gallium-centered tetrahedra constitute less than 20 percent of negatively charged framework tetrahedra to hydrolysis, to displace from the framework one framework atom per 2.5 to 7500 originally-present framework silicon atoms, replacing the displaced framework atoms with gallium by contact of the hydrolysed zeolite with an aqueous solution of a gallium salt at a temperature of 10 to 300° C, and converting the resulting gallosilicate to the hydrogen form by base exchange.

The starting zeolite will usually be gallium-free; if it contains any framework elements other than silicon or germanium these will usually be aluminium and/or boron. Preferably the degree of hydrolysis is such as to displace one framework atom per 15 to 250 silicon atoms. The contact of the hydrolysed zeolite with the gallium salt (advantageously the nitrate) may be performed under autogenous pressure.

The hydrolysis and the introduction of gallium into the framework may be carried out in a single step. Thus, when at least 30 percent of the negatively charged framework tetrahedra of the starting zeolite are boron-centered both are accomplished by contacting the zeolite with the gallium salt solution at a pH of 4 or less. When at least 50 percent of the negatively charged framework tetrahedra of the starting zeolite are aluminium-centered both are accomplished by contacting the zeolite with the gallium salt solution at a pH of 10 or more.

In an alternative method hydrolysis and Ga introduction are decoupled, the hydrolysis being brought about by contacting the starting zeolite with a metal-ion-free source of hydronium ions in a first stage, the contact with gallium solution following as a second stage. The source of hydronium ions may comprise acids such as ethylenediaminetetraacetic and/or nitric acids, or steam. The gallosilicate is usually converted to the hydrogen form by ammonium exchange followed by calcination.

Conversion of a hydrocarbon feed using a catalyst comprising a zeolite in accordance with the invention may be effected by contact at a temperature of 350 to 650° C, a WHSV of 0.1 to 200 $hr^{-1}$ and a pressure of 0.1 to 70 bar. The catalyst may be one which has been regenerated at a temperature of at least 600° C, following previous use in such converting of a hydrocarbon feed, without loss of effectiveness by reason of structural change. Catalysts according to the invention are particularly useful in aromatisation processes wherein the feed comprises C2 to C12 paraffin and is aromatised by contact with the catalyst at 400 to 600° C, 0.1 to 20 WHSV and 0.1 to 35 bar: in such processes the zeolite advantageously has an initial alpha value of at least 500.

When the feed is a cracking feedstock suitable conditions of operation comprise a temperature of 450 to 550° C, a guage pressure of 0 to 10 bar and a WHSV of 1 to 15 $hr^{-1}$, and particularly useful results are obtained when the feed is gasoil or resid. Preferably such cracking is carried out in a fluidised bed cracking unit. An unexpected benefit of the use of the catalyst of the invention for cracking is that the cracking process may be integrated with an independent hydrogen-consuming hydrocarbon conversion process, since hydrogen is produced as a consequence of aromatisation reactions which proceed concurrently with the cracking reaction and may be used as process hydrogen for an independent refining operation such as hydrotreating or reforming.

The gallium modified zeolite beta of the invention gives rise to catalysts with higher cracking activity and higher aromatic selectivity than catalysts based on the starting zeolite. The aromatic products which can be produced from aliphatic feeds include benzene, ethylbenzene, o-, m- and p-xylenes, toluene, and the $C_{10}$+ aromatics. The $C_{10}$+ aromatics significantly increase gasoline motor octane number, compared to the $C_8$-aromatics.

Generally the zeolite is calcined before hydrolysis at temperatures of 400° C and above, suitably in $N_2$ to 538° C at 1° C/min, at 538° C for 8 hours, and then in air at 538° C for 4 hours. Readily available soluble sources of gallium include the chloride, nitrate and sulfate salts. The exact water dilution factor of the soluble source of gallium is not critical. The gallium treatment results in incorporation of gallium into the zeolite framework in a position of tetrahedral substitution, with in some instances concurrent exchange of gallium or gallium impregnation of the zeolite. As an anionic framework element gallium confers on the zeolite a greater aromatisation activity than it would as a cation or impregnant. The gallium treatment can be undertaken at temperatures ranging from ambient up to elevated temperatures, optionally with reflux, including heating under autogenous pressures to temperatures up to about 300° C.

The pH conditions of zeolite contact with the source of gallium will vary depending on the composition of the starting zeolite and on whether hydrolysis is to be brought about by the contact with gallium. When the starting zeolite contains boron and has not been previously subjected to hydrolysis, substitution of gallium atoms for boron atoms in the zeolite framework is achieved by use of a pH of contact of 4 or less. When the zeolite contains aluminium as a framework element and has not been previously subjected to hydrolysis substitution of gallium for framework aluminium is achieved by use of a pH of gallium contact with the zeolite of 10 or greater. The pH of contact is not critical when the zeolite has already been subjected to hydrolysis to displace framework atoms such as Al, B, Si or Ge by reaction with hydronium ions furnished by acid, steam or the like.

After gallium treatment, the zeolite is converted to the hydrogen form, preferably by ammonium ion exchange, followed by calcination. Ammonium ion exchange can be undertaken at ambient temperature up to reflux temperatures and can be repeated, optionally at different temperatures. Prior to ammonium exchange the gallium treated zeolite may be washed free of reagents used in the gallium treatment step.

The source of the ammonium ion is not critical; thus the source can be an ammonium salt such as ammonium nitrate, ammonium sulfate, ammonium chloride, ammonium acetate and mixtures thereof, usually in aqueous solution. By way of illustration, aqueous solutions of 1 $NH_4NO_3$, 1 N $NH_4Cl$ and 1 N $NH_4Cl/NH_4OH$ have been used to effect ammonium ion exchange on these, and similar materials; the $NH_4OH$ may be used to maintain pH and minimise hydronium ion exchange. The pH of the reaction mixture is generally maintained at 7 to 11, preferably at 8 to 10. Ammonium exchange may be conducted for a period of time ranging from 0.5 to 20 hours at a temperature ranging from ambient up to 100°C. Calcination of the ammonium-exchanged zeolite may be effected at temperatures up to 800°C, usually up to 600°C.

Gallium incorporation into the zeolite framework is confirmed by elemental analysis, thermogravimetric analysis and NMR. Thermogravimetric analysis (TGA) following ammonium ion exchange of the gallosilicate zeolite indicates the presence of different ammonium groups from those in the zeolite free of gallium. The TGA was conducted by heating the sample 20°C/minute up to a temperature of about 700°C. All ammonium ion exchanged at sites provided by boron contained in the framework of a silicate zeolite will evolve, i.e., desorb, at temperatures below 300°C. The Temperature Programmed Ammonia Desorption (TPAD) analysis was conducted according to the procedure described by G. T. Kerr et al., Termochim Acta 3, 113 (1971). The $NH_3$-$T_{max}$ had increased to 335-360°C from 180°C for an ammoniated boron-containing "beta". The alpha value increased from 20 for zeolite beta free of gallium to 77 for zeolite beta containing framework gallium. The alpha test is set forth in J. Cat. Vol. IV, 278-287 (1966).

The similarities between Al and Ga solution NMR indicated Ga NMR could be used to distinguish between octahedral and tetrahedral Ga and to determine the amount of Ga present. As with the Al NMR of these materials, similar Ga chemical shifts and line-widths were obtained for the single peak observed. The Ga chemical shifts for Ga-zeolite beta at 156 ppm, measured with respect to $[GA(H_2O)_6]^{3+}$, compared to the solution results indicates the Ga is tetrahedrally coordinated. The Ga peaks of the zeolites are about 400 ppm upfield of the 190 ppm peak for the tetrahedral Ga species not coordinated to silicon in solution. This is consistent with the effect of Si coordination to Al where 4-coordinated Al with four Si neighbours, Al(4Si), is at 55 ppm compared to a 4-coordinated monomeric Al anion, $AlO_4-$, at 80 ppm. This is evidence that Ga is not only tetrahedrally coordinated but is in the framework of the zeolite. Gallium-71 MAS NMR spectra were obtained on a 360 MHz and a 500 MHz spectrometer at the University of Illinois using 3-5 kHz spinning. The magic angle was set using the KBr technique. Pulse excitation (4.0$\mu$s pulses, solution 90° = 8.0$\mu$s) was chosen to provide optimum signal. The pulse conditions did not fulfill Lippmaa's condition of $\phi^3$ is less than 1 to allow uniform excitation of all transitions. At a recycle time of 50 ms, from 87,712 to 144,000 scans were required for good signal/noise. No proton decoupling was used. Spectral signal/noise was enhanced with 500 Hz exponential line broadening. The chemical shifts are referenced to a 1 M solution of $Ga(NO_3)_3$. The Si MAS NMR spectra were obtained on the 200 MHz NMR using 4.0$\mu$s (60°) pulses, a 10.0 s recycle time, and proton decoupling.

The selectivity of the zeolite of the invention to catalyze aromatic (benzene) production, for instance from a $C_2$ to $C_{12}$ paraffin feed, is determined by the formula

$$\frac{weight\ percent\ benzene}{100 - weight\ percent\ of\ hexane\ output}$$

The amount of benzene produced is determined by gas chromatography.

In accordance with a preferred embodiment of the invention, catalytic cracking of heavy hydrocarbon feedstock is conducted in the presence of a catalyst comprising gallosilicate beta. The product has increased aromatic content, and increased octane number, over that of the feed. The catalytic cracking process can exhibit high selectivity for high hydrogen yield; for $C_4$ minus fraction production, that is, for $C_3$ and $C_4$ unsaturates; as well as for $C_3$ and $C_4$ paraffins. The feed is suitably aliphatic $C_6$ + heavy hydrocarbon and, significantly, the cracking process of the invention can be applied to upgrading of gas oils and resids.

4

Catalytic cracking can be undertaken in the absence of added hydrogen under conditions of temperature ranging from 750 to 1200°F, (399 to 650°C), preferably from 800 to 1100°F (427 to 593°C); guage pressures from 0 to 100 psi (101.4 bar), preferably from 0 to 50 psig (50.7 bar); weight hourly space velocity (WHSV) ranging from 0.1 to 200 hr$^{-1}$, preferably from 0.5 to 100 hr$^{-1}$; cat/oil feed) ratios ranging from 0.5 to 20, preferably from 1 to 10. The catalyst may be used in fluid bed catalytic cracking or moving bed catalytic cracking processes. Because of the high selectivity of the process for hydrogen production hydrogen will usually be present during the process even though not deliberately added.

The invention is particularly applicable to the fluid catalytic cracking (FCC) process. Although the design and construction of individual FCC plants vary, the essential elements of an FCC unit are illustrated in US-A-4,368,114.

The treated heavy hydrocarbon has, compared to the feedstock, a reduced aliphatic content, higher aromatic content, increased gasoline content and higher clear octane ratings. Compared to a commercially available FCC cracking catalyst of comparable activity, the catalyst of the invention, used in resid cracking, resulted in higher gasoline yield with 7 to 9 numbers higher clear octane (R + O) ratings.

Hydrogen produced in cracking according to the invention can satisfy the hydrogen requirements of hydrotreating and of reforming processes. Initial hydrotreating of a hydrocarbon feed such as a naphtha serves to convert sulfur, nitrogen and oxygen-containing feed components to hydrogen sulfide, ammonia, and water while depositing-out metal contaminant by hydrodecomposition of organo-metal compounds. Where desired, interstage processing of the effluent from the hydrotreating zone may be effected. Such interstage processing may be undertaken, for example, to provide additional hydrogen, to add or remove heat or to withdraw a portion of the hydrotreated stream for treatment. Hydrotreating of a heavy naphtha fraction may be essential, prior to reforming in a conventional reforming process. Suitably, the temperature in the hydrotreating catalyst bed will be within the approximate range of 550 to 850°F (288 to 454°C). The feed is conducted through the bed at an overall space velocity between 0.1 and 10 and preferably between 0.2 and 2, with hydrogen initially present in the hydrotreating zone in an amount between 1000 and 10,000 standard cubic feet per barrel of feed 178 to 17810 m$^3$/m$^3$), corresponding to a ratio of between 2.4 and 24 moles of hydrogen per mole of hydrocarbon.

The catalyst may be any of the known hydrotreating catalysts, many of which are available as staple articles of commerce. These hydrotreating catalysts are generally metals or metal oxides of Group VIB and/or Group VIII deposited on a solid porous support, such as silica and/or metal oxides such as alumina, titania, zirconia or mixtures thereof. Representative Group VIB metals include molybdenum, chromium and tungsten and Group VIII metals include nickel, cobalt, palladium and platinum. These metal components are deposited, in the form of metals or metal oxides, on the indicated supports in amounts generally between 0.1 and 20 weight percent. One particularly useful hydrotreating catalyst is a commercial catalyst known as Chevron ICR 106 which is a nickel-tungsten-alumina-silica-titania catalyst.

Reforming of a naphtha fraction to produce the reformates of increased octane is undertaken by conventional reforming in semi-regenerative, cyclic or continuous units. Process conditions in reforming include pressures of atmospheric to 500 psig (35.5 bar); temperatures of 800 to 1100°F (427 to 593°C); unit inlet H$_2$HC molar ratios of 5 or less, even 0 (because of hydrogen production during reforming there will be a hydrogen partial pressure in the unit, even when the unit inlet H$_2$/HC ratio is 0); and LHSV of 0.1 to 20.0. Conventional reforming catalysts can be used. To produce low octane severity reformates, naphtha catalyst contact time is reduced during reforming. That contact time can be reduced by decreasing the amount of catalyst which would be used in a unit lined-out to produce reformate of given octane. Alternatively, LHSV of the feed can be increased over that in the lined-out unit. Alternatively, if 3 units are manifolded as in the semi-regenerative process, product can be diverted after the second unit to by-pass the third unit (all three units being run under substantially identical reforming conditions).

Conventional reforming catalysts can be used. Conventional reforming catalysts are chlorided; generally, they are presulfided and used on feeds containing less than 5 ppm sulfur, and preferably less than 1 ppm. They are often run on systems exhibiting low water (vapour) partial pressures. These catalysts can be platinum on alumina chlorided and presulfided run at low water vapour partial pressures; platinum rhenium chlorided and run at low water (vapour) pressures; trimetallics on alumina in which each of the trimetallic components is selected from the group consisting of platinum, indium, thenium, iridium, and rhodium or platinum and tin on alumina chlorided and run at low water vapour partial pressures.

The resultant zeolite containing gallium may be combined with binders or matrix materials which increase its strength, and resistance to attrition and severe conditions of use. Silica, alumina, and silica-alumina are generally used as binders although various clays conventionally used for the purpose may act as the binder. The zeolite can comprise 1 to 90% by weight of the composition including binder and preferably 20 to 70% by weight based on said composition.

## EXAMPLES

### EXAMPLE 1

10 g of zeolite beta of the following composition:

| | |
|---|---|
| $SiO_2$, wt% | 75.4 |
| $Al_2O_3$, wt% | 3.2 |
| Na, wt% | 0.05 |
| N, wt% | 1.47 |
| C, wt% | 13.6 |
| Ash, @ 1000°C, wt% | 81.2 |
| Ga, PPM | 0 |

was calcined in $N_2$ to 538°C at 1°C/min and was held at 538°C for 8 hours. The calcination was then switched to air and was held for an additional 4 hours. The calcined material was refluxed in O.2N NaOH solution with 2.5 g $Ga_2(SO_4)3$ for 2 hours. The treated material was then washed and filtered. After ammonium exchange with $NH_4NO_3$ at reflux temperature and another subsequent room temperature exchange, the material was calcined in air at 1°C/min to 538°C for 4 hours.

The results of testing the n-hexane cracking activity of the above-prepared gallosilicate zeolite beta are listed in Table 1. For comparison, the results of testing the zeolite with no gallium are included. The data show that the alpha of the Ga modified zeolite beta catalyst increased from 426 to 511. Thus the gallium containing catalyst of the invention exhibited higher hexane cracking activity than its gallium-free precursor. More importantly, the benzene selectivity increased from zero to 8%.

## TABLE 1

## Comparison of Cracking Activities and Benzene Selectivities of Ga-Zeolite Beta and Conventional Aluminosilicate Zeolite Beta

### Ga-Zeolite Beta

| Time on Stream (min) | Alpha | Benzene Selectivity |
|---|---|---|
| 5 | 511 | 7.0 |
| 10 | 216 | 8.0 |
| 15 | 138 | 8.0 |
| 20 | 98 | 9.0 |

### Aluminosilicate-Zeolite Beta
(Precursor to Ga-Zeolite Beta)

| Time on Stream (min) | Alpha | Benzene Selectivity |
|---|---|---|
| 5 | 426 | 0.0 |
| 10 | 420 | 0.0 |
| 15 | 400 | 0.0 |
| 20 | 390 | 0.0 |
| 25 | 377 | 0.0 |
| 30 | 369 | 0.0 |

The starting boron-zeolite beta used in the following examples initially contained 0.95 wt% B, 0.54 wt% $Al_2O_3$, 84.5 wt% $SiO_2$, 10.2 wt% C, 2.1 wt% H, 1.5 wt% N and 2000 ppm Na. The zeolite was calcined by heating in $N_2$ at 1°C/min to 538°C then held in air at 538°C for 2 hours. The calcined boron-zeolite beta was then exchanged with IM $NH_4NO_3$ at room temperature. The $SiO_2/Al_2O_3$ of the product from TPD was 54:1, its alpha value 22.

### Example 2

1 g boron-zeolite beta was reacted with 0.4 g $Ga(NO_3)_3$ at room temperature and pH = 2. The sample was then air calcined at 538°C for 2 hours. Elemental analysis showed the product contained 0.01 wt% B, 0.38 wt% $Al_2O_3$, and 1.37 wt% Ga. Its alpha value was 55, with 8-10% benzene selectivity. The exchange capacity by $NH_3$-TPD was 0.2670 meg/g ash (which agrees with the value by elemental analysis, 0.2765 meg/g ash) and $NH_3$-TPD Tmax increased from 180°C to 334°C, indicating that Ga was present in the zeolite beta framework.

### Example 3

The same boron-zeolite beta was extracted with $H_4$EDTA in D.I. $H_2O$ at room temperature for 1 hour. The product contained 0.001 ppm B and 0.43 wt% $Al_2O_3$ and had an alpha of 13.5. 1 g of this acid treated boron-zeolite beta was reacted with 0.19 g $Ga(NO_3)_3$ at room temperature. The product contained 1.04 wt% Ga and had an alpha of 77 with 13-14% benzene selectivity.

### Example 4

The same boron-zeolite beta was extracted sequentially with O.1M and 1.0M $HNO_3$ at room temperature. The product contained 0.001 ppm boron and 0.36 wt% $Al_2O_3$ and had an alpha of 15. 1 g of this acid treated boron-zeolite beta was reacted with 0.25 g $Ga(NO_3)_3$ at room temperature. The product contained 1.38% Ga and had an alpha of 82 with 8-10% benzene selectivity.

Example 5

The same boron-zeolite beta was extracted with $H_4$EDTA in $HNO_3$; 0.2 g $H_4$ EDTA/g zeolite was added to a solution of 160 ml IN $HNO_3$/g zeolite and then stirred for 2 hours at room temperature. The zeolite was isolated and dried overnight at 120° C. the dried zeolite was treated with $Ga(NO_3)_3$ (0.2g/g $Ga(NO_3)_3$) at room temperature for 1 hour. It was then calcined in air at a heating schedule of 2° C/min to 538° C.

Example 6

Following calcination the gallosilicate zeolite beta prepared in Example 5 was tested for its cracking activity by means of the $\alpha$ test. The results of the test, set out in Table 2, show that the hexane cracking activity of the zeolite increased to an $\alpha$ value of 145 from an original $\alpha$ of 26 for the boron-aluminosilicate zeolite beta precursor. More importantly, the benzene selectivity of the gallium modified catalyst increased from essentially zero to between 13 and 14%.

## TABLE 2

### Comparison of Cracking Activities and Benzene Selectivities of Ga-Zeolite Beta and B-Zeolite Beta

#### Ga-Zeolite Beta

| Time on Stream (min) | Alpha | Benzene Selectivity |
|---|---|---|
| 5 | 145 | 13.6 |
| 10 | 78 | 13.6 |
| 15 | 66 | 14.0 |
| 20 | 60 | 13.7 |
| 25 | 55 | 13.9 |
| 30 | 53 | 13.8 |

#### B-Zeolite Beta
(Precursor to Ga-Zeolite Beta)

| Time on Stream (min) | Alpha | Benzene Selectivity |
|---|---|---|
| 5 | 26 | 0.0 |
| 10 | 18 | 0.0 |
| 15 | 17 | 0.0 |
| 20 | 17 | 0.0 |
| 25 | 17 | 0.0 |
| 30 | 17 | 0.0 |

A difference between the two preparations is that the catalyst of Example 1 was prepared in an alkaline medium (pH > 8) while the catalyst in this example was prepared in an acidic environment (pH ~ 5).

Example 7

The same catalyst as employed in Example 6 was compared with a conventional equilibrium FCC catalyst in the cracking of a paraffinic Statfjord atmosphereic resid. The gallosilicate catalyst was pelleted, ground, and sieved to 80 to 100 mesh. The FCC catalyst was used as received. Properties of the equilibrium FCC catalyst are given in Table 3.

## TABLE 3

### Properties of the FCC Catalyst Used in This Study

| | |
|---|---|
| Ash, 1000°C | 97.25 |
| Packed Density, g/cc | 0.96 |
| Loose Density, g/cc | 0.87 |
| Real Density, g/cc | 2.78 |
| Particle Density, g/cc | 1.37 |
| Pore Volume, cc/g | 0.37 |
| Surface Area, $m^2$/g | 113.0 |
| Carbon on catalyst, wt% | 0.17 |
| Alumina, wt% | 43.2 |
| Silica, wt% | 53.0 |
| Total Rare Earths, wt% | 2.95 |
| REY, wt% by x-ray | 14.90 |
| Nickel, ppm | 470 |
| Vanadium, ppm | 1460 |
| Antimony, ppm | 29 |
| Iron, ppm | 5 |
| Copper, ppm | 80 |

### Particle Size Dist. ($\mu$m)

| | |
|---|---|
| 0 to 20, wt% | 0.0 |
| 20 to 40, wt% | 7.1 |
| 40 to 60m, wt% | 35.8 |
| 60 to 80, wt% | 32.1 |
| 80+, wt% | 25.0 |

This catalyst sample was removed from Mobil's Beaumont FCC unit and is representative of a state-of-the-art FCC catalyst. Properties of the Statfjord 'long' resid are given in Table 4.

## TABLE 4

### Properties of Statfjord Atmospheric 'Long' Resid

| | |
|---|---|
| Carbon, XRF, wt% | 85.4 |
| Hydrogen, NMR, wt% | 12.50 |
| Sulfur, wt% | 0.63 |
| Nitrogen, Chemilum, ppm | 1300 |
| Nickel, AA, ppm | 1.4 |
| Vanadium, AA, ppm | 2.9 |
| Iron, AA, ppm | 5.2 |
| Density at 70°C, g/cc | 0.8812 |
| Pour Point, °F | 100 (38°C) |
| Carbon Residue, MCRT, wt% | 3.53 |
| KV at 100°C | 13.11 |
| Pct Aromatic, silica gel GC/MS | 50.91 |
| Pct Non-Aromatic, GC/MS | 48.25 |

### Boiling Point Distribution (wt%)

| | |
|---|---|
| 420-650°F (216-343°C) | 10.1 |
| 650-850°F (343-454°C) | 33.9 |
| 850-1050°F (454-566°C) | 39.0 |
| 1050°F+ (566°C+) | 17.0 |

The atmosphereic resid eas cracked in an automated dense fluid bed unit. Typical cracking conditions were 510° C atmospheric pressure, cat/oil = 1.2 to 7, and WHSV = 1 to 9 hr⁻¹.

Tables 5 and 6 summarize the cracked product distributions from comparable runs with the equilibrium FCC catalyst and the Ga/beta catalyst, respectively.

## TABLE 5

Conversion of Statfjord Long Resid over Equilibrium FS-30

| Run Number | FEED | 97 | 98 | 99 |
|---|---|---|---|---|
| Temperature, $^{\circ}C$ | | 510 | 510 | 510 |
| Cat/Oil | | 5.0 | 7.0 | 3.0 |
| WHSV, $hr^{-1}$ | | 2.1 | 1.95 | 3.61 |
| Grams of Oil Fed | | 52.5 | 62.1 | 48.8 |
| cc of Oil Fed | | 60 | 71 | 55.8 |
| No. of Cycles | | 6 | 10 | 4 |
| Mass Balance | | 98.3 | 99.3 | 94.5 |

### Product Analysis, wt%

| | FEED | 97 | 98 | 99 |
|---|---|---|---|---|
| $C_1$ | | 0.38 | 0.34 | 0.26 |
| $C_2$'s | | 3.67 | 4.02 | 2.86 |
| $C_3$ | | 1.31 | 1.70 | 1.21 |
| $C_3$= | | 9.12 | 11.34 | 8.11 |
| i-$C_4$ | | 1.49 | 1.82 | 1.30 |
| n-$C_4$ | | 0.52 | 0.44 | 0.31 |
| $C_4$='s | | 4.39 | 5.42 | 3.86 |
| $C_5$-330$^{\circ}F$ (166$^{\circ}C$) | | 30.13 | 32.14 | 25.27 |
| 330-420$^{\circ}F$ | | 6.03 | 5.30 | 5.79 |
| 420-650$^{\circ}F$ | 10.1 | 17.06 | 13.27 | 20.97 |
| 650-850$^{\circ}F$ | 33.9 | 6.22 | 4.17 | 10.58 |
| 850-1050$^{\circ}F$ | 39.0 | 1.81 | 1.25 | 3.17 |
| 1050$^{\circ}F$+ | 17.0 | 5.27 | 4.52 | 7.14 |
| % Coke | | 12.10 | 14.27 | 9.17 |

### Product Selectivities

| | | 97 | 98 | 99 |
|---|---|---|---|---|
| Dry Gas | | 5.32 | 5.45 | 4.52 |
| $C_4$- | | 27.43 | 31.37 | 25.96 |
| $C_5$ to 330$^{\circ}F$ | | 39.60 | 40.20 | 36.62 |
| $C_5$ to 420$^{\circ}F$ | | 47.52 | 46.82 | 45.01 |
| 420$^{\circ}$ to 650$^{\circ}$ | | 9.30 | 4.09 | 15.75 |
| Coke | | 15.90 | 17.85 | 13.29 |
| Conversion to 650$^{\circ}F^-$ | | 76.10 | 79.96 | 69.01 |
| Conversion to 420$^{\circ}F^-$ | | 69.14 | 76.79 | 58.14 |
| Conversion to 330$^{\circ}F^-$ | | 63.11 | 71.49 | 53.35 |

## TABLE 5

## TABLE 6

### Conversion of Statfjord Long Resid over Gallium Beta

| Run Number | FEED | 86 | 88 | 90 |
|---|---|---|---|---|
| Temperature, $^{\circ}$C | | 510 | 510 | 510 |
| Cat/Oil | | 1.25 | 3.0 | 5.0 |
| WHSV, hr$^{-1}$ | | 8.6 | 3.8 | 2.0 |
| Grams of Oil Fed | | 85.4 | 48.7 | 22.8 |
| cc of Oil Fed | | 97.6 | 55.6 | 26.0 |
| No. of Cycles | | 7 | 9 | 8 |
| Mass Balance | | 98.3 | 99.3 | 94.5 |

### Product Analysis, wt%

| | FEED | 86 | 88 | 90 |
|---|---|---|---|---|
| $C_1$ | | 0.21 | 0.23 | 0.28 |
| $C_2$'s | | 1.90 | 4.53 | 6.01 |
| $C_3$ | | 3.16 | 4.60 | 7.89 |
| $C_3$= | | 7.78 | 12.55 | 15.83 |
| i-$C_4$ | | 4.99 | 7.74 | 9.27 |
| n-$C_4$ | | 0.95 | 1.47 | 1.98 |
| $C_4$='s | | 3.56 | 4.52 | 4.56 |
| $C_5$-330$^{\circ}$F (166$^{\circ}$C) | | 31.51 | 29.25 | 26.18 |
| 330-420$^{\circ}$F | | 7.14 | 4.95 | 2.93 |
| 420-650$^{\circ}$F | 10.1 | 16.32 | 10.98 | 6.17 |
| 650-850$^{\circ}$F | 33.9 | 10.50 | 6.50 | 2.93 |
| 850-1050$^{\circ}$F | 39.0 | 4.55 | 1.98 | 0.86 |
| 1050$^{\circ}$F+ | 17.0 | - | - | - |
| % Coke | | 7.20 | 10.70 | 15.10 |

### Product Selectivities

| | FEED | 86 | 88 | 90 |
|---|---|---|---|---|
| Dry Gas | | 2.82 | 5.81 | 6.98 |
| $C_4$- | | 30.18 | 43.56 | 50.89 |
| $C_5$ to 330$^{\circ}$F | | 42.17 | 35.75 | 29.08 |
| $C_5$ to 420$^{\circ}$F | | 51.52 | 41.80 | 32.33 |
| 420$^{\circ}$ to 650$^{\circ}$ | | 8.45 | 1.20 | - |
| Coke | | 9.63 | 13.08 | 16.77 |
| Conversion to 650$^{\circ}$F- | | 74.72 | 81.82 | 90.03 |
| Conversion to 420$^{\circ}$F- | | 68.50 | 80.54 | 90.03 |
| Conversion to 330$^{\circ}$F- | | 61.36 | 75.59 | 87.10 |

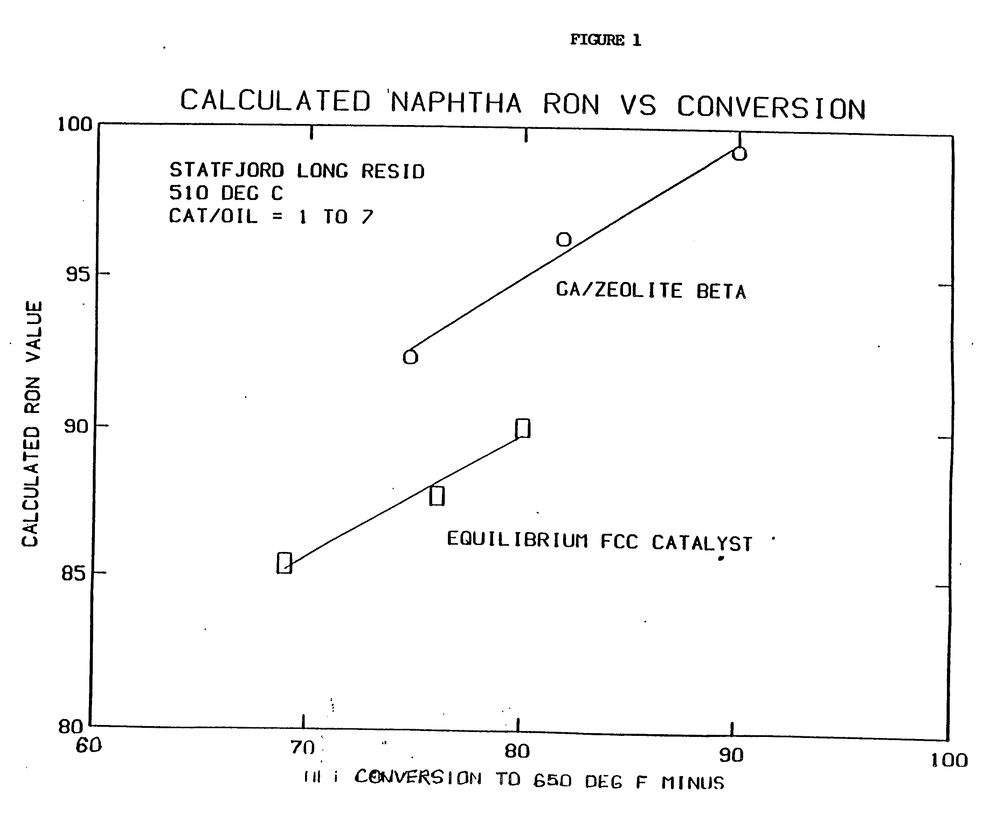

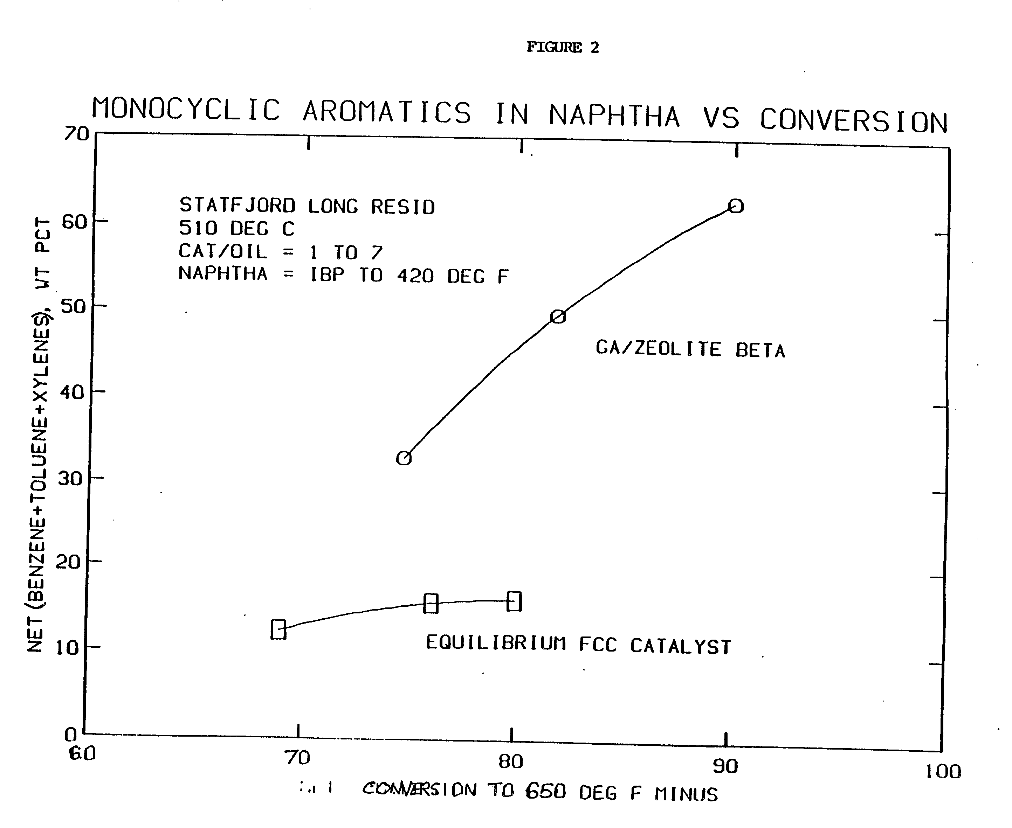

These results show that the Ga/beta catalyst produces less coke, less gas, and more naphtha than the equilibrium catalyst at equivalent conversions. Cracked products from all six runs were subsequently distilled to obtain the naphtha (IBP to 420 $^{\circ}$F) fractions. These fractions were analysed by FID-GC. Clear research octane numbers of the naphthas were estimated by a GC method described by P. C. Anderson et al., "Calculations of the Research Octane Number of Motor Gasolines from Gas Chromatographic Data and a New Approach to Motor Gasoline Quality Control," Journal of the Institute of Petroleum, Vol. 58, p. 560, March 1972. Table 7 summarises the estimated RON values and confirms that the Ga/beta produces a naphtha with a 4 to 6 RON advantage over the conventional equilibrium FCC catalyst (Figure 1). Table 8 compares the amount of benzene, toluene, and xylenes in the naphtha fractions from each of the six runs and shows that the Ga/beta catalyst consistently produces more monocyclic aromatics than the conventional FCC catalyst, which may to some degree explain the RON advantage of this catalyst. Figure 2 plots the total benzene, toluene, and xylene yields vs. conversion for the two catalysts.

## TABLE 7

### Comparison of Research Octane Numbers of Naphthas

| Run No. | Catalyst | Conversion to 650°F | RON* |
|---|---|---|---|
| 86 | Ga/Beta | 74.7 | 92.4 |
| 88 | Ga/Beta | 81.8 | 96.3 |
| 90 | Ga/Beta | 90.0 | 99.3 |
| 99 | REY | 69.0 | 85.4 |
| 97 | REY | 76.1 | 87.7 |
| 98 | REY | 80.0 | 90.1 |

*Computed using method described in the P. C. Anderson et al. method "Calculation of the Research Octane Number of Motor Gasolines from Gas Chromatographic Data and a New Approach to Motor Gasoline Quality Control", in Journal of the Institute of Petroleum, Vol. 58, p. 560 (1972).

## TABLE 8

### Comparison of Pct. Monocyclic Aromatics in Products

| Run No. | Catalyst | Conversion to 650°F | Benzene wt% | Toluene wt% | Xylenes wt% |
|---|---|---|---|---|---|
| 86 | Ga/Beta | 74.7 | 4.1 | 15.5 | 13.2 |
| 88 | Ga/Beta | 81.8 | 7.6 | 25.6 | 16.3 |
| 90 | Ga/Beta | 90.0 | 11.2 | 28.5 | 23.1 |
| 99 | REY | 69.0 | 2.2 | 4.3 | 5.9 |
| 97 | REY | 76.1 | 2.3 | 6.1 | 7.3 |
| 98 | REY | 80.0 | 2.7 | 6.2 | 8.3 |

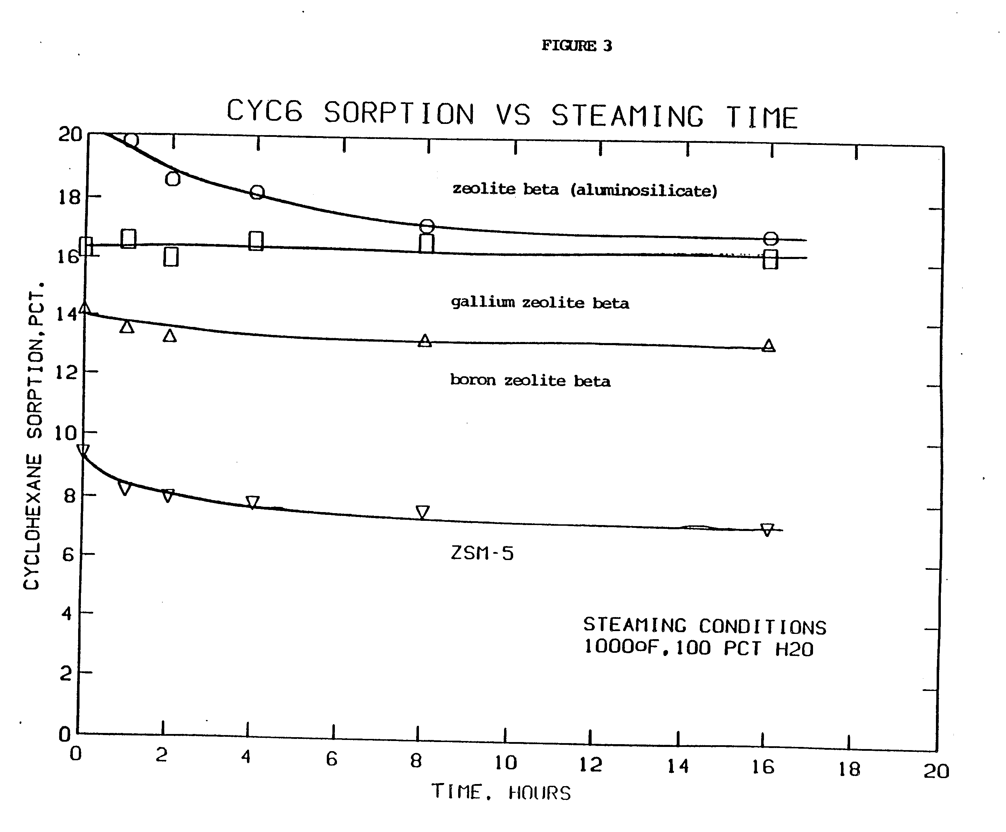

A comparison of the cyclohexane sorption capacity of a Ga/zeolite beta sample prepared according to Example 5 with conventional aluminosilicate and borosilicate zeolite beta samples and with ZSM-5 as a function of steaming time at 539° C is presented in Figure 3 (cyclohexane sorption capacity in this instance is a measurement of crystallinity). Because there is relatively little change in the sorption capacity of the Ga containing sample, these data indicate that the Ga/zeolite beta is as hydrothermally stable as the other three zeolites. Good hydrothermal stability is critical for FCC catalysts since severe conditions are encountered during catalyst regeneration.

## Claims

1. A crystalline metallosilicate zeolite having the x-ray diffraction pattern of zeolite beta and having the formula, in terms of mole ratios of oxides:

$M_{2/n}O:(a)Al_2O_3:(b)B_2O_3:(c)Ga_2O_3:(d)SiO_2$

in which M is a cation of valence n, (a) + (b) + (c)1, (a) = 0 to 0.5, (b) = 0 to 0.3, (c) = 0.2 to 1 and (d) = 5 to 3000.

2. A zeolite according to claim 1 wherein (d):(c) = 30 to 500.

3. A zeolite according to claim 1 or claim 2 wherein (d):(b) = 100 to 10,000.

4. A zeolite according to any preceding claim wherein (d):(a) = 50 to 15,000.

5. A zeolite according to any of claims 2 to 4 which has an alpha value greater than 50.

6. A zeolite according to any preceding claim wherein M is at least partly Ga.

7. A zeolite according to any preceding claim wherein M is at least partly hydrogen or a precursor thereof.

8. A catalyst comprising a composite of 20 to 70% wt of a zeolite according to any preceding claim with 80 to 30% wt of a porous, inorganic matrix.

9. A catalyst according to claim 8 wherein the matrix comprises silica, alumina and/or a clay.

10. A catalyst according to claim 8 or claim 9 which is in the form of particles suitable for use in an FCC or TCC cracking unit.

11. A method of preparing a zeolite according to claim 1 comprising subjecting zeolite beta, in which gallium-centered tetrahedra constitute less than 20 percent of negatively charged framework tetrahedra, to hydrolysis to displace from the framework one framework atom per 2.5 to 7500 originally-present framework silicon atoms, replacing the displaced framework atoms with gallium by contact of the hydrolysed zeolite with an aqueous solution of a gallium salt at a temperature of 10 to 300°C, and converting the resulting gallosilicate to the hydrogen form by base exchange.

12. A method according to claim 11 wherein the starting zeolite is gallium-free.

13. A method according to claim 11 or claim 12 wherein one framework atom per 15 to 250 silicon atoms is displaced by the hydrolysis.

14. A method according to any of claims 11 to 13 wherein the gallium salt is the nitrate.

15. A method according to any of claims 11 to 14 wherein the contact of the hydrolysed zeolite with the gallium salt is under autogenous pressure.

16. A method according to any of claims 11 to 15 in which at least 30 percent of the negatively charged framework tetrahedra of the starting zeolite are boron-centered and in which the hydrolysis of this zeolite and the replacement by gallium of displaced framework atoms are carried out in a single stage by contacting the zeolite with the gallium salt solution at a pH of 4 or less.

17. A method according to any of claims 11 to 15 in which at least 50 percent of the negatively charged framework tetrahedra of the starting zeolite are aluminium-centered and in which the hydrolysis of this zeolite and the replacement by gallium of displaced framework atoms are carried out in a single stage by contacting the zeolite with the gallium salt solution at a pH of 10 or more.

18. A method according to any of claims 11 to 15 in which the hydrolysis is brought about by contacting the starting zeolite with a metal-ion-free source of hydronium ions.

19 A method according to claim 18 wherein the source of hydronium ions comprises ethylenediaminetetraacetic and/or nitric acids.

20. A method according to any of claims 11 to 19 wherein the gallosilicate is converted to the hydrogen form by ammonium exchange followed by calcination.

21. A process for converting a hydrocarbon feed which comprises contacting the same at a temperature of 350 to 650°C, a WHSV of 0.1 to 200 hr⁻¹ and a pressure of 0.1 to 70 bar with a catalyst comprising a zeolite in accordance with any of claims 1 to 7.

22. A process according to claim 21 in which the catalyst is one which has been regenerated at a temperature of at least 600°C following previous use in such converting of a hydrocarbon feed.

23. A process according to claim 21 or claim 22 wherein the feed comprises C2 to C12 paraffin and is aromatised by contact with the catalyst at 400 to 600°C, 0.1 to 20 WHSV and 0.1 to 35 bar.

24. A process according to claim 23 wherein in the fresh catalyst the zeolite has an alpha value of at least 500.

25. A process according to claim 21 or 22 wherein the feed is a cracking feedstock which is cracked at a temperature of 450 to 550°C, a guage pressure of 0 to 10 bar and a WHSV of 1 to 15 hr⁻¹.

26. A process according to claim 25 wherein said feed is gasoil or resid.

14

EP 0 317 227 A2

27. A cyclic, regenerative cracking process according to claim 25 or claim 26 which is carried out in a fluidised bed cracking unit.

28. A cracking process according to any of claims 25 to 27 which is integrated with an independent hydrogen-consuming hydrocarbon conversion process, hydrogen produced as a consequence of aromatisation reactions which proceed concurrently with the cracking reaction being used as process hydrogen for the independent process.

29. A process according to claim 28 wherein the independent process is hydrotreating or reforming.

FIGURE 1

CALCULATED NAPHTHA RON VS CONVERSION

FIGURE 2

MONOCYCLIC AROMATICS IN NAPHTHA VS CONVERSION

STATFJORD LONG RESID
510 DEG C
CAT/OIL = 1 TO 7
NAPHTHA = IBP TO 420 DEG F

GA/ZEOLITE BETA

EQUILIBRIUM FCC CATALYST

NET (BENZENE+TOLUENE+XYLENES), WT PCT

CONVERSION TO 650 DEG F MINUS

FIGURE 3

CYC6 SORPTION VS STEAMING TIME

zeolite beta (aluminosilicate)

gallium zeolite beta

boron zeolite beta

ZSM-5

STEAMING CONDITIONS
1000oF, 100 PCT H20

TIME, HOURS

CYCLOHEXANE SORPTION, PCT.